# FASCICULE DE BREVET EUROPEEN

(11) **EP 3 983 290 B1**
(45) Date de publication et mention de la délivrance du brevet: **09.08.2023**
(21) Numéro de dépôt: 20735483.8
(22) Date de dépôt: 12.06.2020
(51) Int. Cl.: B64C 1/14

(54) **PORTE D'AERONEF A MECANISME DE COMMANDE VERTICAL**
FLUGZEUGTÜR MIT VERTIKALEM STEUERMECHANISMUS
AIRCRAFT DOOR WITH VERTICAL CONTROL MECHANISM

(30) Priorité: 15.06.2019 FR 1906436
(43) Date de publication de la demande: 20.04.2022
(73) Titulaire: Latecoere, 31500 Toulouse (FR)
(72) Inventeur: DUBOSC, Grégory, 82170 Grisolles (FR)
(74) Mandataire: Junca, Eric
(86) Numéro de dépôt international: PCT/EP2020/025275
(87) Numéro de publication internationale: WO 2020/253986

(56) Documents cités:
- RU-C1- 2 548 644
- US-A- 4 854 010

## Description

### DOMAINE TECHNIQUE

L'invention concerne le domaine de l'aéronautique et concerne plus particulièrement les portes d'aéronefs et leurs mécanismes de verrouillage et de déverrouillage.

Un aéronef comporte généralement plusieurs ouvertures dans son fuselage, pour permettre l'accès à la cabine ou aux soutes. Ces ouvertures sont munies de portes dont le mécanisme de verrouillage/déverrouillage doit assurer la solidité du verrouillage et l'étanchéité de cette porte pendant le vol. De plus, l'ouverture doit être simple et rapide à réaliser par le personnel navigant depuis l'intérieur de l'aéronef, ou par des équipes de secours depuis l'extérieur. La résistance à la différence de pression entre intérieur de la cabine et l'extérieur de l'avion est réalisée au moyen de butées installées sur les pourtours de l'ouvrant de la porte et de son encadrement.

### ART ANTÉRIEUR

Les portes d'aéronefs du document US4854010A comportent:
- un ouvrant comprenant une structure de porte, une paroi externe fixée sur la structure de porte, et des butées de porte ;
- un dormant comprenant un cadre de porte destiné à être fixé sur le fuselage de l'aéronef, le cadre de porte comportant des butées de cadre ;
- un bras de support relié à l'ouvrant et comportant une extrémité montée pivotante sur le cadre de porte, ce bras de support et l'ouvrant étant mobiles entre : une position de fermeture dans laquelle l'ouvrant obture le cadre de porte, les butées de porte étant verrouillée contre les butées de cadre ; une position de déverrouillage dans laquelle les butées de porte sont dégagées des butées de cadre ; et une position d'ouverture dans laquelle l'ouvrant est dégagé du cadre de porte ;
- un mécanisme de verrouillage/déverrouillage adapté à commander le passage de la position de fermeture à la position de déverrouillage, et inversement, ce mécanisme de verrouillage/déverrouillage comportant pour son actionnement un levier interne et un levier externe, ces leviers étant montés sur la structure de porte et étant mobiles entre une position de verrouillage et une position de déverrouillage.

Différents systèmes d'ouverture et de fermeture existent pour les portes d'aéronef.

Un premier type de système consiste, en ouverture, d'abord à lever ou baisser la porte, verticalement, pour dégager les butées de porte des butées de cadre, puis à lui appliquer un mouvement de translation circulaire pour la dégager de son encadrement parallèlement à celui-ci.

Un autre type de système consiste d'abord à effectuer un premier pivotement autour d'un premier axe virtuel passant par la médiane verticale de la porte puis, dans un deuxième temps, la porte est pivotée autour de charnières placées sur le long d'un axe coïncidant avec un bord vertical de l'encadrement, ce qui entraine une position finale de porte avec sa partie interne tournée vers l'extérieur.

### EXPOSÉ DE L'INVENTION

L'invention a pour but d'améliorer les portes d'aéronefs de l'art antérieur et en particulier leurs mécanismes de verrouillage/déverrouillage.

À cet effet, l'invention vise une porte d'aéronef comportant :
- un ouvrant comprenant une structure de porte, une paroi externe fixée sur la structure de porte, et des butées de porte ;
- un dormant comprenant un cadre de porte destiné à être fixé sur le fuselage de l'aéronef, le cadre de porte comportant des butées de cadre ;
- un bras de support relié à l'ouvrant et comportant une extrémité montée pivotante sur le cadre de porte, ce bras de support et l'ouvrant étant mobiles entre : une position de fermeture dans laquelle l'ouvrant obture le cadre de porte, les butées de porte étant verrouillée contre les butées de cadre ; une position de déverrouillage dans laquelle les butées de porte sont dégagées des butées de cadre ; et une position d'ouverture dans laquelle l'ouvrant est dégagé du cadre de porte ;
- un mécanisme de verrouillage/déverrouillage adapté à commander le passage de la position de fermeture à la position de déverrouillage, et inversement, ce mécanisme de verrouillage/déverrouillage comportant pour son actionnement un levier interne et un levier externe, ces leviers étant montés sur la structure de porte et étant mobiles entre une position de verrouillage et une position de déverrouillage.

Dans cette porte d'aéronef, le mécanisme de verrouillage/déverrouillage comporte :
- un arbre de commande s'étendant selon un axe sensiblement vertical, l'arbre de commande étant monté sur la structure de porte selon une liaison pivot autour de l'axe de l'arbre de commande, le levier interne et le levier externe étant reliés à l'arbre de commande en s'étendant transversalement à l'arbre de commande de sorte qu'une action sur l'un des leviers entraine en rotation l'arbre de commande autour de son axe ;
- une piste de guidage s'étendant selon un plan sensiblement orthogonal à l'arbre de commande, cette piste de guidage comportant à son extrémité une ouverture ;
- un doigt d'actionnement fixé sur le bras de support, ce doigt d'actionnement étant adapté à coopérer avec la piste de guidage ;
- une transmission mécanique adaptée à entraîner un déplacement du doigt d'actionnement lorsque l'arbre de commande est actionné en rotation.

Dans cette porte d'aéronef, le mécanisme de verrouillage/déverrouillage présente :
- une configuration d'actionnement correspondant à la course angulaire des leviers entre leur position de verrouillage et leur position de déverrouillage, configuration dans laquelle le doigt d'actionnement est inséré dans la piste de guidage, la rotation de l'arbre de commande entrainant un déplacement du doigt d'actionnement le long de la piste de guidage ;
- une configuration de libération dans laquelle les leviers sont en position de déverrouillage, configuration dans laquelle le doigt d'actionnement est mobile entre une première position où le doigt d'actionnement est disposé au niveau de l'ouverture de la piste de guidage, et une deuxième position où le doigt d'actionnement est en dehors de la piste de guidage, l'ouvrant étant alors en position d'ouverture.

L'axe dans lequel s'étend l'arbre de commande est dit « sensiblement vertical » pour désigner le fait que l'arbre de commande s'étend dans une direction verticale plutôt que dans une direction horizontale. Cet arbre de commande s'étend verticalement par opposition aux arbres de commande qui s'étendent dans un plan horizontal, que ce soit parallèlement à l'axe longitudinal de l'aéronef, ou transversalement à l'axe longitudinal de l'aéronef.

Selon l'invention, dans le cas le plus courant, l'arbre de commande peut être strictement vertical et cette disposition est la plus commode pour l'utilisateur. Cependant, les fuselages d'aéronef étant couramment de section générale circulaire, la position de la porte sur le fuselage peut amener la porte a être inclinée par rapport à la verticale, et l'arbre de commande peut alors être incliné pour suivre l'inclinaison de la porte due à la courbure du fuselage. Cependant, un tel arbre de commande reste défini, au sens de la présente invention, comme sensiblement vertical dans la mesure où lorsque l'utilisateur se présente devant la porte d'aéronef pour l'ouvrir ou la fermer, l'arbre de commande s'étend bien devant lui selon une direction haut/bas et non selon une direction droite/gauche ou une direction avant/arrière (les directions haut/bas, droite/gauche, et avant/arrière sont définies par rapport à l'utilisateur faisant face à la porte). La définition de l'axe dans lequel s'étend l'arbre de commande, dit « sensiblement vertical », exclu donc les arbres dits horizontaux qui sont parallèles à l'axe longitudinal de l'aéronef ou qui sont orthogonaux à l'axe longitudinal de l'aéronef mais perpendiculaires à l'ouvrant.

L'invention met en oeuvre une cinématique d'ouverture et de fermeture de porte d'aéronef par un mécanisme beaucoup plus simple que les mécanismes de l'art antérieur. Cette cinématique permet une implémentation mécanique simple tout en offrant une grande liberté dans les mouvements possibles pour l'ouvrant lors des séquences d'ouverture ou de fermeture. La forme du chemin de guidage peut prévoir différentes plages à parcourir par le doigt d'actionnement, en fonction des mouvements souhaités pour l'ouvrant et relativement à la stratégie d'ouverture et de fermeture choisie.

Selon une caractéristique préférée, la porte d'aéronef est dite « à échappement latéral » ce qui signifie que la porte se déverrouille grâce à des mouvements latéraux de l'ouvrant permettant le dégagement des butées de porte par rapport aux butées de cadre, sans recourir à des mouvements verticaux de l'ouvrant. La cinématique prévue par l'invention est particulièrement indiquée pour cette stratégie d'ouverture et de fermeture. Dans ce cas, bien que les mouvements d'ouverture et de fermeture puissent apparaitre plus complexes que, par exemple une porte de l'art antérieur à mouvement vertical de déverrouillage, cet agencement permet une simplification drastiques du mécanisme de verrouillage/déverrouillage, avec les gains en cout, en masse et en fiabilité associés.

La piste de guidage cumule les fonctions de définition des mouvements imprimés à l'ouvrant avec les fonctions de verrouillage des butées. En effet, l'invention limite le nombre de guidages qui sont munis de cames et de galets qui s'imbriquent les unes dans les autres, au moyen généralement de mouvements verticaux de l'ouvrant. Le nombre de guidages des portes de l'art antérieur, les rendant complexes, lourdes et couteuses, est diminué par la coopération du doigt d'actionnement avec la piste de guidage. L'invention rend superflu tout mouvement vertical de l'ouvrant et permet le verrouillage et le déverrouillage des butées uniquement par des mouvements latéraux. Les guidages de porte et de cadre peuvent ainsi être simplifiés, allégés et rendus plus fiables.

Un abaissement significatif du cout global d'une telle porte d'aéronef est obtenu avec un mécanisme et un nombre de guide réduits. La porte d'aéronef selon l'invention présente de plus une intrusion négligeable à l'intérieur de l'aéronef durant les séquences d'ouverture et de fermeture.

Selon au autre objet, l'invention vise un procédé de verrouillage/déverrouillage d'une porte d'aéronef telle que décrite ci-dessus et dans lequel, dans la configuration d'actionnement :
- le doigt d'actionnement parcours une première plage de la piste de guidage entrainant un mouvement de rapprochement mutuel du bras de support et de l'ouvrant ainsi qu'un mouvement de déplacement latéral mutuel du bras de support et de l'ouvrant, de sorte que l'ouvrant soit déplacé vers l'intérieur et dans une direction latérale selon un premier sens, en dégageant un premier ensemble de butées de porte par rapport aux butées de cadre ;
- le doigt d'actionnement parcours une deuxième plage de la piste de guidage entrainant un mouvement d'éloignement mutuel du bras de support et de l'ouvrant, de sorte que l'ouvrant soit déplacé vers l'extérieur ;
- le doigt d'actionnement parcours une troisième plage de la piste de guidage selon un parcours entrainant un mouvement de déplacement latéral mutuel du bras de support et de l'ouvrant, de sorte que l'ouvrant soit déplacé dans une direction latérale selon un deuxième sens, en dégageant un deuxième ensemble de butées de porte par rapport aux butées de cadre.

La porte d'aéronef peut présenter les caractéristiques additionnelles suivantes, seules ou en combinaison :
- la transmission mécanique comporte une fourchette disposée en vis-à-vis de la piste de guidage et reliée à l'arbre de commande, et en ce que, dans la configuration d'actionnement, le pivotement de la fourchette entraine un déplacement du doigt d'actionnement le long de la piste de guidage ;
- la fourchette s'étend selon un plan sensiblement orthogonal à l'arbre de commande, et en ce que la fourchette est montée pivotante sur la structure de porte autour d'un axe sensiblement parallèle à l'arbre de commande ;
- dans la configuration d'actionnement, le doigt d'actionnement est inséré à la fois dans la piste de guidage et dans la fourchette ;
- le doigt d'actionnement est monté sur un bras d'actionnement solidaire du bras de support, le bras d'actionnement étant disposé entre la fourchette et la piste de guidage, le doigt d'actionnement comportant un double galet s'étendant transversalement de part et d'autre du bras d'actionnement ;
- la fourchette comporte deux branches d'actionnement et une ouverture à son extrémité, et , dans la configuration de libération, l'ouverture de la fourchette est disposée en vis-à-vis de l'ouverture de la piste de guidage ;
- la transmission mécanique comporte une came solidaire en rotation de l'arbre de commande ;
- la transmission mécanique comporte une bielle reliant la came à la fourchette et adaptée à entraîner le pivotement de la fourchette lors de la rotation de la came et de l'arbre de commande ;
- la came comporte un chemin de came, et en ce que la bielle comporte à l'une de ses extrémités un galet inséré dans le chemin de came ;
- le chemin de came comporte : une première plage s'étendant en arc de cercle centré sur l'arbre de commande, le doigt d'actionnement n'étant pas entraîné en déplacement par la rotation de l'arbre de commande lorsque le galet parcours cette première plage ; une deuxième plage dans laquelle le doigt d'actionnement est entraîné en déplacement par la rotation de l'arbre de commande lorsque le galet parcours cette deuxième plage ;
- la transmission mécanique comporte un levier de guidage monté rotatif sur la structure de porte et en liaison pivot avec le galet ;
- la bielle est reliée à l'axe de pivotement de la fourchette par une biellette ;
- le bras de support est relié à l'ouvrant par l'intermédiaire d'un avant-bras de support qui est en liaison pivot avec le bras de support et avec la structure de porte, l'ouvrant étant ainsi mobile par rapport au cadre de porte selon une direction longitudinale et une direction transversale ;
- la porte comprend un bras de pivotement relié à l'ouvrant et relié au cadre de porte par une liaison pivot, et adapté à entraîner le pivotement de l'ouvrant autour d'un axe sensiblement vertical ;
- les butées de porte et les butées de cadre sont disposées sur les rebords latéraux de la porte, les butées de porte étant verrouillées contre les butées de cadre par un contact plan sur plan lorsque la porte est en position de fermeture ;
- la piste de guidage comporte une plage dont l'orientation entraine un mouvement du doigt de guidage entrainant un rapprochement mutuel du bras de support et de l'ouvrant ;
- la piste de guidage comporte une plage dont l'orientation entraine un mouvement du doigt de guidage entrainant un éloignement mutuel du bras de support et de l'ouvrant ;
- la piste de guidage comporte une plage dont l'orientation entraine un mouvement du doigt de guidage entrainant un mouvement latéral mutuel du bras de support et de l'ouvrant.

### PRÉSENTATION DES FIGURES

D'autres caractéristiques et avantages de l'invention ressortiront de la description non limitative qui suit, en référence aux dessins annexés dans lesquels :
[Fig.1] La figure 1 illustre schématiquement une porte d'aéronef selon l'invention, en position fermée ;
[Fig.2] La figure 2 illustre schématiquement une première étape d'une séquence d'ouverture de la porte de la figure 1 ;
[Fig.3] La figure 3 illustre schématiquement une deuxième étape d'une séquence d'ouverture de la porte de la figure 1 ;
[Fig.4] La figure 4 illustre schématiquement une troisième étape d'une séquence d'ouverture de la porte de la figure 1 ;
[Fig.5] La figure 5 illustre schématiquement une quatrième étape d'une séquence d'ouverture de la porte de la figure 1 ;
[Fig.6] La figure 6 illustre schématiquement une cinquième étape d'une séquence d'ouverture de la porte de la figure 1 ;
[Fig.7] La figure 7 est une vue générale d'une porte d'aéronef selon l'invention ;
[Fig.8] La figure 8 est une vue agrandie de la porte d'aéronef de la figure 7 ;
[Fig.9] La figure 9 est une vue ascendante de la figure 8 ;
[Fig.10] La figure 10 est une vue en perspective du mécanisme de verrouillage/déverrouillage de la porte de la figure 7 ;
[Fig.11] La figure 11 est une vue en coupe illustrant le montage du doigt d'actionnement de la porte de la figure 7 ;
[Fig.12] La figure 12 est une vue de dessous du mécanisme de la figure 10, en position fermée ;
[Fig.13] La figure 13 est une vue de dessous du mécanisme de la figure 10 et illustre une première étape d'une séquence de déverrouillage de la porte ;
[Fig.14] La figure 14 est une vue de dessous du mécanisme de la figure 10 et illustre une deuxième étape d'une séquence de déverrouillage de la porte ;
[Fig.15] La figure 15 est une vue de dessous du mécanisme de la figure 10 et illustre une troisième étape d'une séquence de déverrouillage de la porte.

### DESCRIPTION DÉTAILLÉE

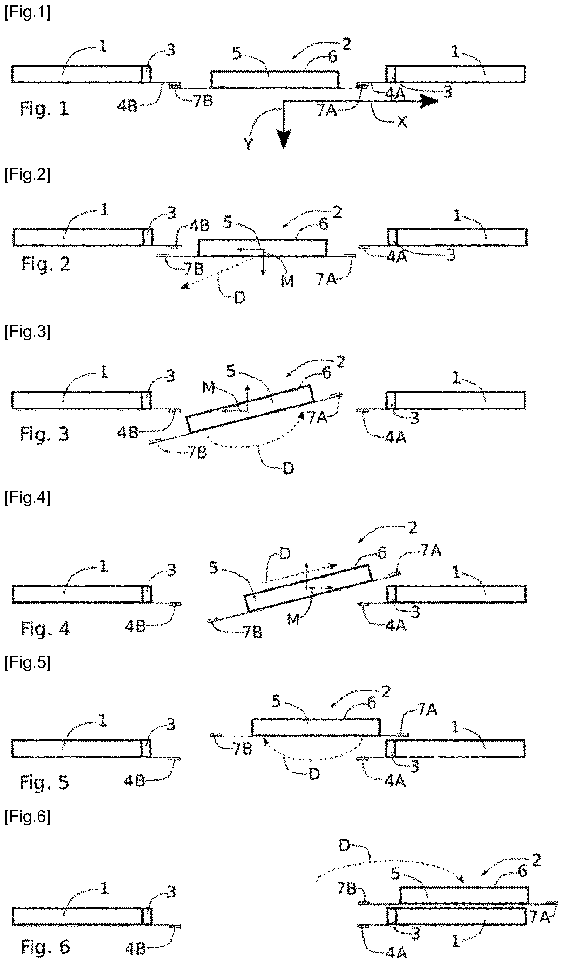

Les figures 1 à 6 sont des figures schématiques illustrant le mouvement d'une porte d'aéronef selon l'invention. Cette porte d'aéronef présente un fonctionnement dit « à échappement latéral » ce qui signifie que la porte se déverrouille grâce à des mouvements latéraux de l'ouvrant permettant le dégagement des butées de porte par rapport aux butées de cadre. Ces mouvements latéraux sont ici défini comme des mouvements selon une direction longitudinale X parallèle à l'axe longitudinal de l'aéronef.

Les figures 1 à 6 illustrent schématiquement les opérations permettant l'ouverture de la porte d'aéronef. La fermeture de cette porte d'aéronef se déroule par les mêmes opérations réalisées dans l'ordre inverse.

La figure 1 schématise une portion de fuselage 1 d'un aéronef ainsi qu'une porte 2. La porte 2 comprend un dormant constitué ici d'un cadre de porte 3 qui est fixé sur le fuselage 1 et qui est muni de butées 4 de cadre. La porte 2 comprend également un ouvrant 5 qui est muni d'une paroi externe 6 tournée vers l'extérieur de l'aéronef, ainsi que de butées 7 de porte.

Sur cette vue schématique de la figure 1, la portion de fuselage 1 et la porte 2 sont vues de dessus, en coupe selon un plan horizontal. La flèche X sur la figure 1 illustre l'axe longitudinal de l'aéronef, et pointe vers l'avant de l'aéronef. La flèche Y illustre l'axe transversal de l'aéronef et est pointée vers l'intérieur de l'aéronef. Les butées de cadre comportent ainsi des butées avant 4A de cadre des butées arrière 4B de cadre. De même, les butées de porte comprennent des butées 7A avant de porte et des butées 7B arrière de porte.

Dans la position de la figure 1, la porte 2 est en position de fermeture, l'ouvrant 5 obturant le cadre 3 de porte, cette fermeture étant verrouillée par la sollicitation des butées 7 de porte contre les butées 4 de cadre, par un contact plan sur plan. Cette position verrouillée permet le vol de l'aéronef.

À partir de cette position de fermeture de la figure 1, le procédé d'ouverture de la porte 2 est illustré en référence aux figures 2 à 6. Sur ces figures, le déplacement de l'ouvrant est indiqué par les flèches D et les composantes de l'action qui est transmise à l'ouvrant 5 par le mécanisme de verrouillage/déverrouillage, et qui permet le déplacement D, est indiqué par le repère M.

Un premier mouvement, illustré à la figure 2 et commandé par le mécanisme de verrouillage/déverrouillage, entraine l'ouvrant 5 vers l'intérieur de l'aéronef et vers l'arrière. Les butées 7 de porte se trouvent ainsi à l'écart des butées 4 de cadre selon la direction transversale Y. De plus, les butées avant 7A de porte sont dégagées des butées avant 4A de cadre, c'est-à-dire que les butées avant 7A de porte ne sont plus en vis-à-vis des butées avant 4A de cadre, les butées avant 4A de cadre n'empêchant donc plus un déplacement des butées avant 7A de porte vers l'extérieur de l'aéronef. Ce déplacement D de l'ouvrant est possible grâce à des efforts transmis à l'ouvrant par le mécanisme de verrouillage/déverrouillage selon les deux directions M.

À la suite d'un deuxième déplacement D illustré à la figure 3, l'ouvrant 5 est pivoté autour d'un axe vertical de sorte que les butées avant 7A de porte sont déplacées vers l'extérieur de l'aéronef, au-delà du niveau des butées avant 4A de cadre. Ce déplacement D de l'ouvrant en rotation est possible grâce à des efforts transmis à l'ouvrant par le mécanisme de verrouillage/déverrouillage selon les deux directions M.

À la suite d'un troisième déplacement D illustré à la figure 4, l'ouvrant 5 est ensuite translaté vers l'avant dans son propre plan, c'est-à-dire que l'ouvrant 5 subit une translation le long d'une direction s'étendant entre une butée arrière 7B et une butée avant 7A. Ce déplacement D permet alors de dégager les butées arrière 7B de porte par rapport aux butées arrière 4B de cadre. Les butées 7B de porte ne sont plus en face des butées 4B de cadre et le mouvement de l'ouvrant 5 vers l'extérieur de l'aéronef n'est plus entravé par aucune butée. Ce déplacement D de l'ouvrant en rotation est possible grâce à des efforts transmis à l'ouvrant par le mécanisme de verrouillage/déverrouillage selon les deux directions M.

Dans un quatrième déplacement D illustré à la figure 5, l'ouvrant 5 subit une rotation autour d'un axe vertical de sorte qu'il retrouve une orientation parallèle au fuselage 1. Ce mouvement de rotation ne nécessite ici pas de transmission d'efforts de la part du mécanisme de verrouillage/déverrouillage, car il ne nécessite pas de mouvement du bras de support de la porte. Ce mouvement de rotation peut être réalisé par un dispositif permettant l'orientation de la porte, tel qu'un bras de pivotement décrit plus loin.

Lors d'un dernier déplacement D d'ouverture, illustré à la figure 6, l'ouvrant 5 est entraîné selon une translation circulaire venant positionner l'ouvrant 5 contre le fuselage 1, en maintenant l'ouvrant 5 parallèle au fuselage 1 et en dégageant complètement le cadre 3 pour permettre l'accès à l'aéronef. Dans la position de la figure 6, la porte d'aéronef est en position d'ouverture.

Le procédé permettant la fermeture de la porte 2 se déroule en sens inverse depuis la position de la figure 6 jusqu'à la position de la figure 1.

L'ouverture et la fermeture de la porte 2 ainsi que les opérations correspondantes de verrouillage et de déverrouillage des butées 4, 7 sont réalisées uniquement avec des opérations : de translations latérales de l'ouvrant 5 (suivant l'axe X) ; de translations transversales (suivant l'axe Y) de l'ouvrant 5 ; et de rotations de l'ouvrant 5 autour d'un axe vertical. L'ouvrant 5 est mobile uniquement dans un plan horizontal, l'ouvrant 5 étant fixe dans la direction verticale.

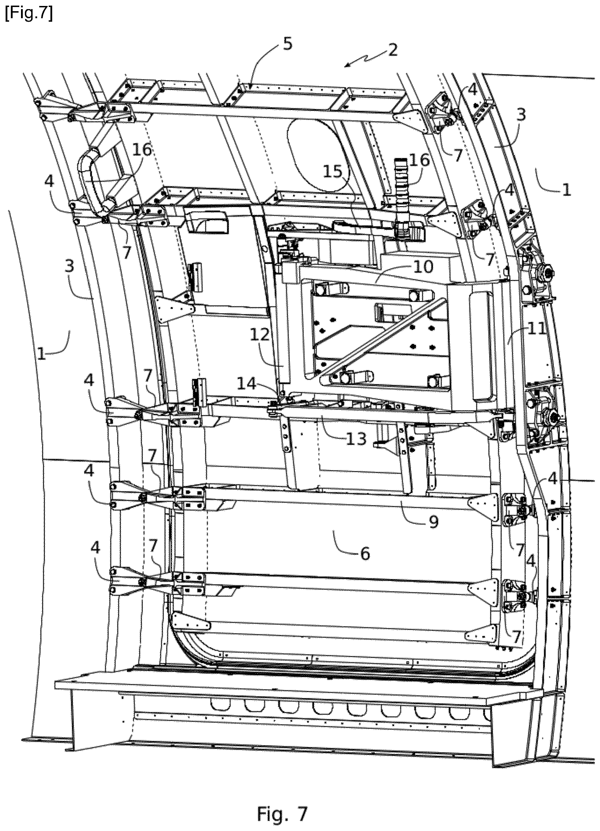

La figure 7 représente la porte d'aéronef 2 en position de fermeture (position de la figure 1) et vue depuis l'intérieur de l'aéronef.

Le cadre 3 de porte est représenté fixé au fuselage 1, les butées 4 de cadre étant boulonnées sur deux montants latéraux du cadre 3 de porte.

L'ouvrant 5 comprend une structure de porte 9 composée généralement de poutres et de longerons. La paroi externe 6 de l'ouvrant 5 est fixée sur la structure de porte 9. Les butées 7 de porte sont également boulonnées sur la structure de porte 9.

La porte 2 comprend de plus un bras de support 10 relié à l'ouvrant 5 et monté rotatif sur le cadre 3 par une liaison pivot 11. Le bras de support 10 permet les mouvements de l'ouvrant 5 par rapport au fuselage 1, pour permettre l'ouverture et la fermeture de la porte, en supportant le poids de l'ouvrant 5. Le bras de support 10 peut être relié directement à la structure de porte 9, ou par l'intermédiaire d'un ou plusieurs avant-bras, ou de glissières, ou de tout autre type de liaison en fonction des mouvements possibles souhaités entre l'ouvrant 5 et le bras de support 10. Dans le présent exemple, le bras de support 10 est relié, par son extrémité opposée à la liaison pivot 11, à un avant-bras 12. Le bras de support 10 est relié par une liaison pivot à l'avant-bras 12, ce dernier étant lui-même relié par une liaison pivot à la structure de porte 9. Grâce à ce montage :
- un mouvement de rapprochement ou d'éloignement mutuel du bras de support 10 et de l'ouvrant 5 provoque un mouvement de l'ouvrant 5 vers l'intérieur ou vers l'extérieur de l'aéronef ;
- un mouvement de translation mutuelle latéralement du bras de support 10 et de l'ouvrant 5 provoque un mouvement latéral de l'ouvrant 5 vers l'avant ou vers l'arrière de l'aéronef.

Ces mouvements sont avantageusement combinés grâce à la rotation possible entre le bras de support 10 et l'avant-bras de support 12.

La porte 2 comprend également un bras de pivotement 13 et un avant-bras de pivotement 14 qui sont reliés entre eux par une liaison pivot. Le bras de pivotement 13 est également relié par une liaison pivot au cadre 3 de porte, et l'avant-bras de pivotement 14 est relié par une liaison pivot à la structure de porte 9. Le bras de pivotement 13 et l'avant-bras de pivotement 14 permettent d'orienter l'ouvrant 5 lorsque ce dernier est déplacé par le bras de support 10 et permettent notamment de commander les mouvements de pivotement de l'ouvrant 5 autour d'un axe vertical.

La porte 2 comprend de plus un mécanisme de verrouillage/déverrouillage dont seul le levier externe 15 est visible sur la figure 7. Sur cette figure 7, le levier externe 15 est en position de verrouillage. À partir de cette position, le levier externe 15 peut être actionné en rotation autour d'un axe vertical jusqu'à une position de déverrouillage dans laquelle les butées 7 de porte sont dégagées des butées 4 de cadre (position de la figure 5), et dans laquelle l'ouvrant 5 est libéré du mécanisme de verrouillage/déverrouillage et peut être repoussé manuellement vers l'extérieur jusqu'à sa position d'ouverture (position de la figure 6). La porte 2 comprend de plus une poignée 16 permettant la manipulation manuelle de l'ouvrant 5 lorsqu'il est ainsi libéré du mécanisme de verrouillage/déverrouillage.

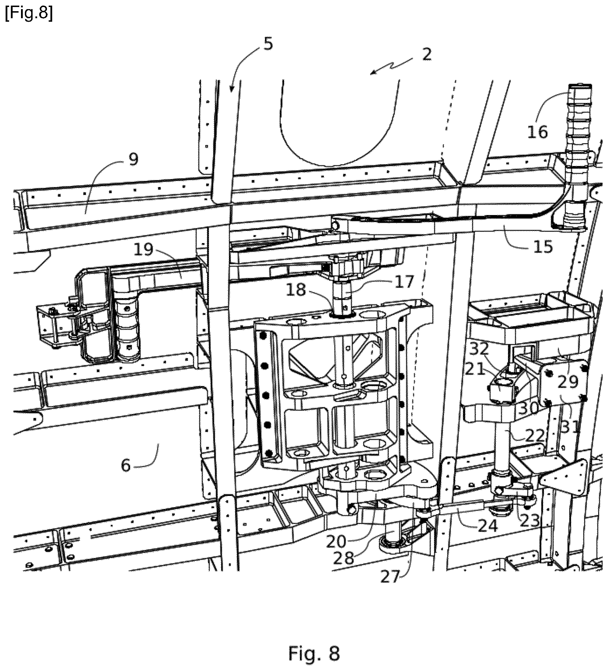

Le mécanisme de verrouillage/déverrouillage de la porte 2 va maintenant être décrit en référence aux figures 8, 9 et 10.

La figure 8 est une vue agrandie de la figure 7. Sur cette figure 8, le bras de support 10 n'a pas été représenté pour laisser voir les éléments du mécanisme de verrouillage/déverrouillage qui sont situés derrière le bras de support 10. D'autres éléments tels que le bras de pivotement 13, son avant-bras 14, et divers capotages n'ont pas été représentés pour simplifier la figure.

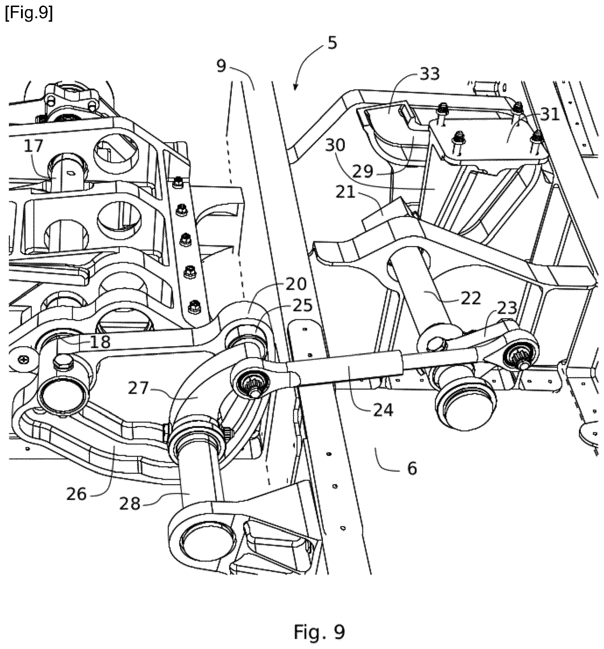

La figure 9 est une vue en perspective, par le dessous, d'une portion de la figure 8.

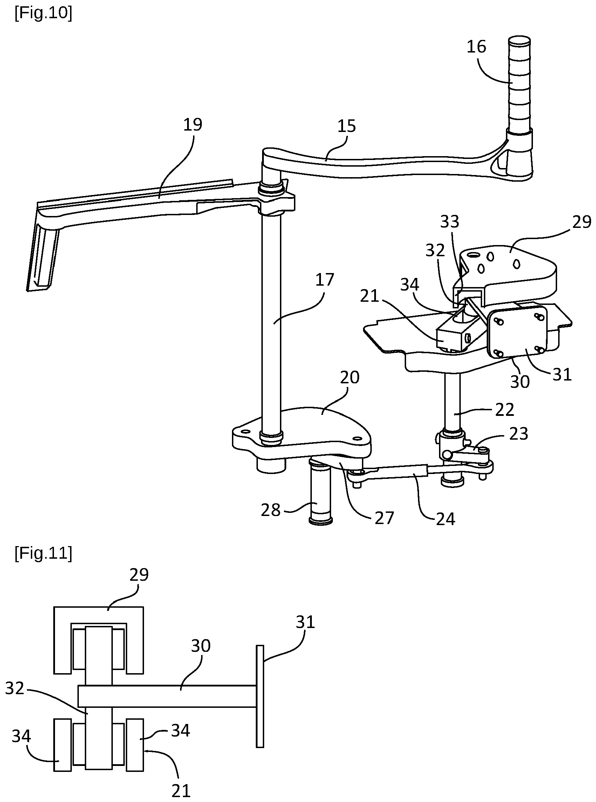

La figure 10 est une vue en perspective du mécanisme de verrouillage/déverrouillage représenté seul.

En référence aux figures 8 à 10, le mécanisme de verrouillage/déverrouillage, comprend un arbre de commande 17 monté sur des paliers 18 solidaires de la structure de porte 9. L'arbre de commande 17 est monté tournant sur la structure de porte 9, autour de son axe longitudinal, qui s'étend verticalement.

Le levier interne 15 et un levier externe 19 sont directement fixés sur l'arbre de commande 17 et s'étendent transversalement à l'arbre de commande 17, de préférence perpendiculairement à cet arbre 17. Les leviers 15, 19 sont fixés sur l'arbre de commande 17 par tout moyen permettant à ces leviers 15, 19 d'entrainer l'arbre de commande 17 en rotation, par exemple par vissage, clavetage, montage à cannelures, etc. Le levier interne 15, le levier externe 19 et l'arbre de commande 17 sont ainsi solidaires, sans aucun dispositif de démultiplication ou de renvoi de mouvement. Ce montage simplifie et fiabilise considérablement l'actionnement du mécanisme.

Le levier externe 19 permet d'actionner l'arbre de commande 17 de la même manière que le levier interne 15, mais est quant à lui accessible depuis l'extérieur de l'aéronef.

Le mécanisme de verrouillage/déverrouillage comporte de plus une came 20 fixée sur l'arbre de commande 17, à son extrémité opposée aux leviers 15, 19. La came 20 est montée sur l'arbre de commande 17 par tout moyen permettant d'entrainer une rotation de la came 20 lors de la rotation de l'arbre de commande 17 autour de son axe longitudinal.

Le mécanisme de verrouillage/déverrouillage comporte de plus une fourchette 21 qui s'étend selon un plan perpendiculaire à l'arbre de commande 17. Cette fourchette 21 comporte un arbre 22 parallèle à l'arbre de commande 17 et monté rotatif sur la structure de porte 9. La fourchette 21 peut être entraînée en rotation par l'arbre 22. Cet arbre 22 peut être entraîné en rotation par une biellette 23 montée sur l'extrémité de l'arbre 22 qui est opposée à la fourchette 21. La fourchette 21 comporte deux branches d'actionnement 34 ainsi qu'une ouverture 35 à l'extrémité des deux branches d'actionnement 34.

La came 20 est reliée à la fourchette 21 par une bielle 24 dont l'une des extrémités est en liaison pivot avec la biellette 23 et dont l'autre extrémité comporte un galet 25 associé à la came 20. La came 20 comporte en effet un chemin de came 26 dans lequel le galet 25 est captif.

Par ailleurs, le galet 25 est associé à un levier 27 qui est pivotant autour d'un arbre 28 parallèle à l'arbre de commande 17. L'arbre 28 est également monté tournant sur la structure de porte 9 et le levier 27 s'étend orthogonalement à cet arbre 28. Le levier 27 restreint le mouvement du galet 25 à un arc de cercle centré sur l'arbre 28 et permet la stabilité de position du galet 25 dans le chemin de came 26.

Le dispositif de verrouillage/déverrouillage comporte de plus une piste de guidage 29 disposée en vis-à-vis de la fourchette 21. La piste de guidage est une pièce qui s'étend dans un plan perpendiculaire à l'arbre de commande 17 et qui comporte un chemin de guidage interne adapté à guider le mouvement d'un galet.

Entre la piste de guidage 29 et la fourchette 21, s'étend un bras d'actionnement 30 qui est fixé sur le bras de support 10. Le bras de support 10 n'ayant pas été représenté sur les figures 8 à 10, seule la chape 31 est représentée. Cette chape 31 permet de rendre solidaire le bras d'actionnement 30 du bras de support 10.

Le bras d'actionnement 30 comporte à son extrémité un doigt d'actionnement qui est ici constitué d'un double galet 32 qui est inséré dans la piste de guidage 29 et dans la fourchette 21. La figure 11 illustre schématiquement en coupe le montage du bras d'actionnement 30 par rapport à la fourchette 21 et à la piste de guidage 29, de sorte que le double galet 32 puisse être entraîné en déplacement par la fourchette 21, le galet 32 parcourant ainsi la piste de guidage 29.

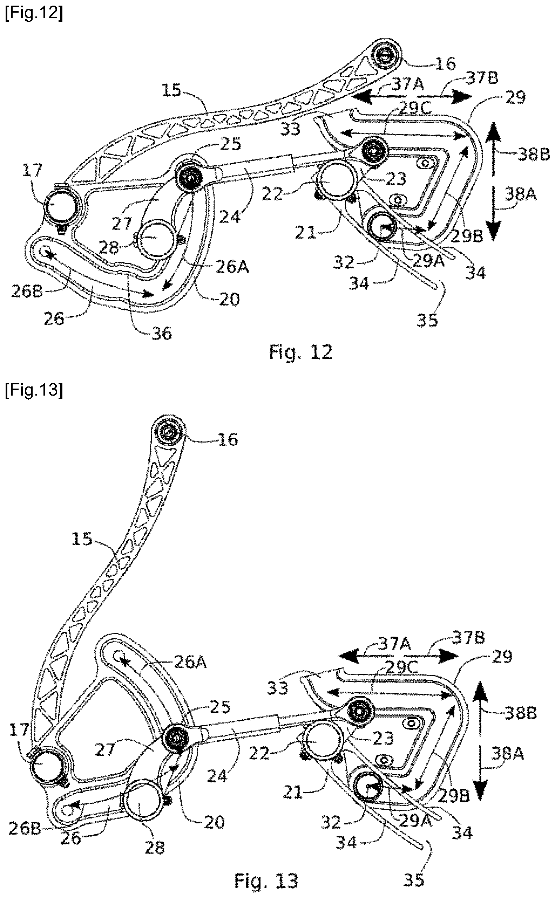

Les figures 12 à 15 représentent le dispositif de verrouillage/déverrouillage vu du dessous. Ces figures montrent notamment les formes du chemin de came 26 et de la piste de guidage 29. Le bras d'actionnement 30 n'a pas été représenté pour simplifier les figures, seul le double galet 32 apparait. Sur les figures 12 à 15, seul le levier interne 15 a été représenté pour simplifier les figures, étant entendu que le levier externe 19 est solidaire en rotation de l'arbre de commande 17 et a donc le même comportement.

Le chemin de came 26 présente une forme générale en V avec une première plage 26A et une deuxième plage 26B. La piste de guidage 29 présente quant à elle une forme générale en C avec une première plage 29A, une deuxième plage 29B et une troisième plage 29C. À l'extrémité de la troisième plage 29C, la piste de guidage comporte une ouverture 33 par laquelle le double galet 32 peut entrer et sortir de la piste de guidage 29. L'ouverture 33 présente de préférence une forme d'entonnoir pour faciliter la réception du double galet 32 dans la piste de guidage 29.

Un procédé de déverrouillage de la porte d'aéronef, préalable à l'ouverture de cette porte, va maintenant être décrit en référence aux figures 12 à 15.

Sur la figure 12, le levier interne 15 est dans sa position de verrouillage qui est celle des figures 7 à 10 et qui correspond à la position de fermeture de la porte (figure 1). Dans cette position, le galet 25 est en butée à l'extrémité de la plage 26A du chemin de came 26, tandis que le double galet 32 est positionné à l'extrémité fermée de la piste de guidage 29.

À partir de la position de verrouillage de la figure 12, le levier interne 15 est actionné vers sa position de déverrouillage. La figure 13 illustre une première phase d'actionnement au cours de laquelle l'actionnement du levier 15 entraine la rotation de l'arbre de commande 17 et donc de la came 20. La rotation de la came 20 entraine le galet 25 à parcourir la première plage 26A. La forme de la plage 26A est un arc de cercle centré sur l'axe de rotation de l'arbre de commande 17, ce qui implique que sur toute cette première plage 26A, la came 20 n'entraine aucun déplacement du galet 25 relativement à la fourchette 21. La bielle 24 et la fourchette 21 restent dans leur position initiale.

Cette première phase d'actionnement permet tout d'abord de n'obtenir le déverrouillage de la porte (qui peut-être critique en termes de sécurité) qu'à partir d'une certaine course des leviers 15, 19, de sorte que l'intention de déverrouiller la porte soit clairement établie pour démarrer le déverrouillage. Cette première phase d'actionnement peut également être mise à profit pour commander, avec l'arbre de commande 17, d'autres fonctions préliminaires au déverrouillage de la porte, tel que par exemple le déblocage d'un verrou.

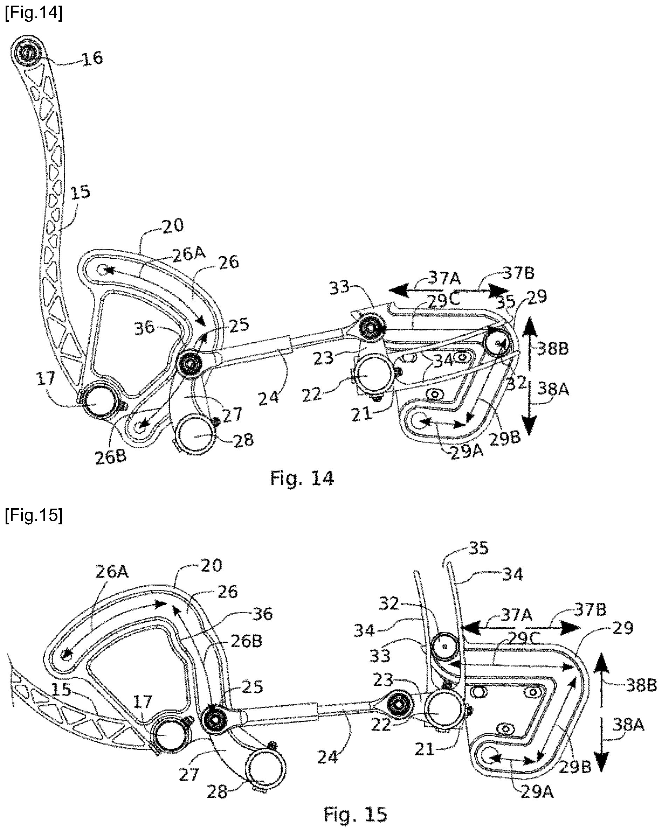

À partir de la position de figure 13, dans une deuxième phase d'actionnement, la came 20 poursuit sa rotation et le galet 25 poursuit son parcours dans la deuxième plage 26B, jusqu'à un lobe 36. Cette deuxième phase d'actionnement abouti à la position illustrée à la figure 14.

Sur la deuxième plage 26B, le chemin de came 26 est en rupture par rapport au profil circulaire de la première plage 26A de sorte que le chemin de came 26 réalise sa fonction de came en entrainant une translation du galet 25 en direction de l'arbre de commande 17. Entre la figure 13 et la figure 14, le galet 25 a donc entraîné en translation la bielle 24, ce qui a entraîné un pivotement de la fourchette 21 jusqu'à sa position de la figure 14.

La fourchette 21, dans son pivotement, a entraîné le double galet 32 le long de la piste de guidage 29. Durant ce déplacement, le double galet 32 a parcouru la première plage 29A et la deuxième plage 29B de la piste de guidage 29. Le double galet 32 étant directement relié au bras de support, ce déplacement entraine un mouvement du bras de support 10 par rapport à l'ouvrant 5. Ce mouvement a la capacité d'entrainer l'ouvrant 5 selon une direction transversale (flèche Y sur la figure 1), et selon une direction latérale (flèche X de la figure 1).

Compte tenu de l'agencement de la porte du présent exemple, le déplacement du double galet 32 permet les mouvements suivants de l'ouvrant 5 :
- un déplacement du double galet 32 selon la flèche 37A entraine un déplacement de l'ouvrant 5 dans la direction X et vers l'avant de l'aéronef ;
- un déplacement du double galet 32 selon la flèche 37B entraine un déplacement de l'ouvrant 5 dans la direction X et vers l'arrière de l'aéronef ;
- un déplacement du double galet 32 selon la flèche 38A entraine un déplacement de l'ouvrant 5 dans la direction Y et vers l'intérieur de l'aéronef ;
- un déplacement du double galet 32 selon la flèche 38B entraine un déplacement de l'ouvrant 5 dans la direction Y et vers l'extérieur de l'aéronef.

La piste de guidage 29 permet d'organiser les déplacements du double galet 32, et donc du bras de support 10, pour provoquer les mouvements souhaités pour l'ouvrant 5, parmi ces mouvements possibles pour l'ouvrant 5, qui peuvent être combinés en fonction de l'agencement du bras de support 10, de l'avant-bras de support 12, du bras de pivotement 13, et de l'avant-bras de pivotement 14.

Dans le présent exemple, en référence à la stratégie de déverrouillage illustrée aux figures 1 à 6, la première plage 29A de la piste de guidage 29 présente une orientation telle que le double galet 32 est entraîné à la fois dans le sens de la flèche 37B et dans le sens de la flèche 38A. Le parcours de la première plage 29A par le double galet 32 entraine donc un mouvement de l'ouvrant 5 latéralement vers l'arrière et, simultanément, vers l'intérieur de l'aéronef. La fin du parcours de la plage 29A par le double galet 32 correspond à la position illustrée à la figure 2.

La deuxième plage 29B présente quant à elle une orientation entrainant un déplacement du double galet 32 simultanément dans le sens de la flèche 37B et dans le sens de la flèche 38B. Sur cette deuxième plage 29B, le mouvement de l'ouvrant 5 vers l'arrière continue tandis que son mouvement vers l'intérieur a été inversé en un mouvement vers l'extérieur de l'aéronef. La fin du parcours de la deuxième plage 29B par le double galet 32 correspond à la position de la figure 14, et à la position de la porte représentée figure 3. Notons ici que le déplacement de l'ouvrant 5 vers l'intérieur de l'aéronef, aboutissant à la position de la figure 2, a été réalisé en maintenant l'ouvrant 5 parallèle au fuselage 1, tandis que le mouvement de l'ouvrant 5 vers l'extérieur de l'aéronef, aboutissant à la position de la figure 3, a été partiellement transformé en un pivotement grâce au travail du bras de pivotement 13 et de l'avant-bras de pivotement 14. L'invention et la présente description visent les moyens de verrouillage/déverrouillage à même de provoquer ces déplacements de l'ouvrant 5 dans les directions longitudinales X et transversales Y de l'aéronef, étant entendu que l'homme du métier saura combiner ces déplacements et les transformer en rotation en fonction de la stratégie d'ouverture souhaitée.

Dans la position de la figure 14, le lobe 36 permet de conférer une certaine stabilité à cette position qui autrement aurait été instable du fait du changement important d'angle de la piste de guidage 29 entre la deuxième plage 29B et la troisième plage 29C.

La figure 15 illustre une troisième phase d'actionnement dans laquelle le levier intérieur 15 a parcouru la totalité de sa course jusqu'à venir dans sa position de déverrouillage. Pendant cette troisième phase d'actionnement, le galet 25 a parcouru la totalité de la deuxième plage 26B poursuivant ainsi l'entrainement en rotation de la fourchette 21.

Dans cette position de la figure 15, le double galet 32 a parcouru la troisième plage 29C dont l'orientation a entraîné le double galet 32 simultanément dans la direction de la flèche 37A et de la flèche 38B. L'ouvrant 5 a été donc été entraîné simultanément dans la direction longitudinale X vers l'avant de l'aéronef ainsi que dans la direction transversale Y vers l'extérieur de l'aéronef. Ce mouvement correspond aux positions des figures 4 puis 5. Notons que sur la figure 5, la fin de ce déplacement de l'ouvrant 5 vers l'avant et vers l'extérieur a été transformée en mouvement de rotation pour ramener l'ouvrant 5 parallèle au fuselage 1 (cette rotation étant ici optionnelle).

Dans la position de la figure 15, l'ouverture 35 de la fourchette 21 est en vis-à-vis de l'ouverture 33 de la piste de guidage 29 de sorte que le double galet 32 peut librement quitter la fourchette 21 et la piste de guidage 29 par leur ouverture 33, 35 respective. Le double galet 32 a parcouru la totalité de la piste de guidage 29 et est maintenant en position de libération. Cette position correspond à la position de la figure 5 dans laquelle le mécanisme de verrouillage/déverrouillage a terminé le déverrouillage de la porte et l'ouvrant 5 peut ensuite être manipulé à la main pour passer à sa position de la figure 6. Entre la position de la figure 5 et la position de la figure 6, le double galet 32 est en dehors de la piste de guidage 29.

Le procédé permettant le verrouillage de la porte se déroule selon la même séquence en sens inverse. L'ouvrant 5 est alors ramené manuellement depuis sa position de la figure 6 jusqu'à sa position de la figure 5, le double galet 32 étant alors accueilli dans l'ouverture 35 de la fourchette 21, ainsi que dans l'ouverture 33 de la piste de guidage 29 jusqu'à la position de la figure 15. La manoeuvre de l'un des leviers 15, 19, de sa position de verrouillage vers sa position de déverrouillage entrainant alors les phases d'actionnement correspondant, dans l'ordre, aux figures 14, 13, et 12.

Le mécanisme de verrouillage/déverrouillage comporte ainsi :
- une configuration d'actionnement correspondant à la course angulaire des leviers 15, 19 entre leur position de verrouillage et leur position de déverrouillage, configuration dans laquelle l'entrainement en rotation de la fourchette 21 entraine le déplacement du double galet 32 le long de la piste de guidage 29 ;
- une configuration de libération dans laquelle les leviers 15, 19 sont en position de déverrouillage et l'ouverture de la fourchette est disposée en vis-à-vis de l'ouverture de la piste de guidage (à partir de la position de la figure 15). Dans cette configuration, le double galet 32 est soit à sa position de la figure 15, soit en dehors de la piste de guidage 29.

Des variantes de réalisation de la porte d'aéronef peuvent être mises en oeuvre sans sortir du cadre de l'invention. Par exemple, le doigt d'actionnement 32 et le galet 25 peuvent comporter un ou plusieurs galets roulants ou à friction, ou tout autre dispositif pouvant être entraîné à parcourir la piste de guidage 29 ou le chemin de came 26.

Par ailleurs, la forme de la piste de guidage 29 peut être adaptée pour d'autres stratégies d'ouverture et de fermeture que celle donnée ici en exemple, en exploitant les possibilités de mouvements de l'ouvrant 5 entrainées par les mouvements possibles du doigt d'actionnement 32 selon les flèches 37A, 37B, 38A, 38B.

## Revendications

1. Porte d'aéronef comportant :
- un ouvrant (5) comprenant une structure de porte (9), une paroi externe (6) fixée sur la structure de porte (9), et des butées (7) de porte ;
- un dormant comprenant un cadre de porte (3) destiné à être fixé sur le fuselage de l'aéronef, le cadre de porte (3) comportant des butées (4) de cadre ;
- un bras de support (10) relié à l'ouvrant (5) et comportant une extrémité montée pivotante sur le cadre de porte (3), ce bras de support (10) et l'ouvrant étant mobiles entre : une position de fermeture dans laquelle l'ouvrant (5) obture le cadre de porte (3), les butées (7) de porte étant verrouillée contre les butées (4) de cadre ; une position de déverrouillage dans laquelle les butées (7) de porte sont dégagées des butées (4) de cadre ; et une position d'ouverture dans laquelle l'ouvrant (5) est dégagé du cadre de porte (3) ;
- un mécanisme de verrouillage/déverrouillage adapté à commander le passage de la position de fermeture à la position de déverrouillage, et inversement, ce mécanisme de verrouillage/déverrouillage comportant pour son actionnement un levier interne (15) et un levier externe (19), ces leviers (15,19) étant montés sur la structure de porte (9) et étant mobiles entre une position de verrouillage et une position de déverrouillage ;
le mécanisme de verrouillage/déverrouillage comportant :
- un arbre de commande (17) s'étendant selon un axe sensiblement vertical, l'arbre de commande (17) étant monté sur la structure de porte (9) selon une liaison pivot (18) autour de l'axe de l'arbre de commande (17), le levier interne (15) et le levier externe (19) étant reliés à l'arbre de commande (17) de sorte qu'une action sur l'un des leviers (15,19) entraine en rotation l'arbre de commande (17) autour de son axe ;
- une piste de guidage (29) s'étendant selon un plan sensiblement orthogonal à l'arbre de commande (17);
- un doigt d'actionnement (32) fixé sur le bras de support (10), ce doigt d'actionnement (32) étant adapté à coopérer avec la piste de guidage (29) ;
- une transmission mécanique adaptée à entraîner un déplacement du doigt d'actionnement (32) lorsque l'arbre de commande (17) est actionné en rotation ;
le mécanisme de verrouillage/déverrouillage présentant:
- une configuration d'actionnement correspondant à la course angulaire des leviers (15,19) entre leur position de verrouillage et leur position de déverrouillage, configuration dans laquelle le doigt d'actionnement (32) est inséré dans la piste de guidage (29), la rotation de l'arbre de commande (17) entraînant un déplacement du doigt d'actionnement (32) le long de la piste de guidage (29) ;
- une configuration de libération dans laquelle les leviers (15,19) sont en position de déverrouillage, configuration dans laquelle le doigt d'actionnement (32) est mobile entre une première position et une deuxième position, l'ouvrant (5) étant alors en position d'ouverture ;
Cette porte d'aéronef étant **caractérisé en ce que** :
- le levier interne (15) et le levier externe (19) sont reliés à l'arbre de commande (17) en s'étendant transversalement à l'arbre de commande (17) ;
- la piste de guidage (29) comporte à son extrémité une ouverture (33) ;
- le doigt d'actionnement (32) est disposé en première position au niveau de l'ouverture (33) de la piste de guidage (29), et
- le doigt d'actionnement (32) est disposé en deuxième position en dehors de la piste de guidage (29).

2. Porte d'aéronef selon la revendication 1, **caractérisée en ce que** la transmission mécanique comporte une fourchette (21) disposée en vis-à-vis de la piste de guidage (29) et reliée à l'arbre de commande (17), et **en ce que**, dans la configuration d'actionnement, le pivotement de la fourchette (21) entraine un déplacement du doigt d'actionnement (32) le long de la piste de guidage (29).

3. Porte d'aéronef selon la revendication 2, **caractérisée en ce que** la fourchette (21) s'étend selon un plan sensiblement orthogonal à l'arbre de commande (17), et **en ce que** la fourchette (21) est montée pivotante sur la structure de porte (9) autour d'un axe sensiblement parallèle à l'arbre de commande (17).

4. Porte d'aéronef selon l'une des revendications 2 ou 3 **caractérisée en ce que**, dans la configuration d'actionnement, le doigt d'actionnement (32) est inséré à la fois dans la piste de guidage (29) et dans la fourchette (21).

5. Porte d'aéronef selon la revendication 4, **caractérisée en ce que** le doigt d'actionnement (32) est monté sur un bras d'actionnement (30) solidaire du bras de support (10), le bras d'actionnement (30) étant disposé entre la fourchette (21) et la piste de guidage (29), le doigt d'actionnement comportant un double galet (32) s'étendant transversalement de part et d'autre du bras d'actionnement (30).

6. Porte d'aéronef selon l'une des revendications 2 à 5, **caractérisée en ce que** la fourchette (21) comporte deux branches d'actionnement (34) et une ouverture (35) à son extrémité, et **en ce que**, dans la configuration de libération, l'ouverture (35) de la fourchette (21) est disposée en vis-à-vis de l'ouverture (33) de la piste de guidage (29).

7. Porte d'aéronef selon l'une des revendications 2 à 6, **caractérisée en ce que** la transmission mécanique comporte une came (20) solidaire en rotation de l'arbre de commande (17).

8. Porte d'aéronef selon la revendication 7, **caractérisée en ce que** la transmission mécanique comporte une bielle (24) reliant la came (20) à la fourchette (21) et adaptée à entraîner le pivotement de la fourchette (21) lors de la rotation de la came (20) et de l'arbre de commande (17).

9. Porte d'aéronef selon la revendication 8, **caractérisée en ce que** la came (20) comporte un chemin de came (26), et **en ce que** la bielle (24) comporte à l'une de ses extrémités un galet (25) inséré dans le chemin de came (26).

10. Porte d'aéronef selon la revendication 9, **caractérisée en ce que** le chemin de came (26) comporte :
- une première plage (26A) s'étendant en arc de cercle centré sur l'arbre de commande (17), le doigt d'actionnement (32) n'étant pas entraîné en déplacement par la rotation de l'arbre de commande (17) lorsque le galet (25) parcours cette première plage (26A) ;
- une deuxième plage (26B) dans laquelle le doigt d'actionnement (32) est entraîné en déplacement par la rotation de l'arbre de commande (17) lorsque le galet (25) parcours cette deuxième plage (26B).

11. Porte d'aéronef selon l'une des revendications 9 ou 10, **caractérisée en ce que** la transmission mécanique comporte un levier de guidage (27) monté rotatif sur la structure de porte (9) et en liaison pivot avec le galet (25).

12. Porte d'aéronef selon l'une des revendications 8 à 11, **caractérisée en ce que** la bielle (24) est reliée à l'axe de pivotement de la fourchette (21) par une biellette (24).

13. Porte d'aéronef selon l'une quelconque des revendications précédentes, **caractérisée en ce que** le bras de support (10) est relié à l'ouvrant (5) par l'intermédiaire d'un avant-bras de support (12) qui est en liaison pivot avec le bras de support (10) et avec la structure de porte (9), l'ouvrant (5) étant ainsi mobile par rapport au cadre de porte (3) selon une direction longitudinale (X) et une direction transversale (Y).

14. Porte d'aéronef selon l'une quelconque des revendications précédentes, **caractérisée en ce qu'**elle comporte un bras de pivotement (13) relié à l'ouvrant (5) et relié au cadre de porte (3) par une liaison pivot, et adapté à entraîner le pivotement de l'ouvrant (5) autour d'un axe sensiblement vertical.

15. Porte d'aéronef selon l'une quelconque des revendications précédentes, **caractérisée en ce que** les butées (7) de porte et les butées (4) de cadre sont disposées sur les rebords latéraux de la porte, les butées (7) de porte étant verrouillées contre les butées (4) de cadre par un contact plan sur plan lorsque la porte est en position de fermeture.

16. Porte d'aéronef selon l'une quelconque des revendications précédentes, **caractérisée en ce que** la piste de guidage (29) comporte une plage dont l'orientation entraine un mouvement du doigt de guidage (32) entrainant un rapprochement mutuel du bras de support (10) et de l'ouvrant (5).

17. Porte d'aéronef selon l'une quelconque des revendications précédentes, **caractérisée en ce que** la piste de guidage (29) comporte une plage dont l'orientation entraine un mouvement du doigt de guidage (32) entrainant un éloignement mutuel du bras de support (10) et de l'ouvrant (5).

18. Porte d'aéronef selon l'une quelconque des revendications précédentes, **caractérisée en ce que** la piste de guidage (29) comporte une plage dont l'orientation entraine un mouvement du doigt de guidage (32) entrainant un mouvement latéral mutuel du bras de support (10) et de l'ouvrant (5).

19. Procédé de déverrouillage d'une porte d'aéronef conforme à l'une des revendications 1 à 18, **caractérisée en ce que**, dans la configuration d'actionnement :
- le doigt d'actionnement (32) parcours une première plage (29A) de la piste de guidage (29) entrainant un mouvement de rapprochement mutuel du bras de support (10) et de l'ouvrant (5) ainsi qu'un mouvement de déplacement latéral mutuel du bras de support (10) et de l'ouvrant (5), de sorte que l'ouvrant (5) soit déplacé vers l'intérieur et dans une direction latérale selon un premier sens, en dégageant un premier ensemble de butées (7) de porte par rapport aux butées (4) de cadre ;
- le doigt d'actionnement (32) parcours une deuxième plage (29B) de la piste de guidage (29) entrainant un mouvement d'éloignement mutuel du bras de support (10) et de l'ouvrant (5), de sorte que l'ouvrant (5) soit déplacé vers l'extérieur ;
- le doigt d'actionnement (32) parcours une troisième plage (29C) de la piste de guidage (29) selon un parcours entrainant un mouvement de déplacement latéral mutuel du bras de support (10) et de l'ouvrant (5), de sorte que l'ouvrant (5) soit déplacé dans une direction latérale selon un deuxième sens, en dégageant un deuxième ensemble de butées (7) de porte par rapport aux butées (4) de cadre.

## Patentansprüche

1. Luftfahrzeugtür, umfassend:
- einen Flügel (5) mit einer Türstruktur (9), einer an der Türstruktur (9) befestigten Außenwand (6) und Türanschlägen (7);
- eine Zarge mit einem Türrahmen (3), der dazu bestimmt ist, am Rumpf des Luftfahrzeugs befestigt zu sein, wobei der Türrahmen (3) Rahmenanschläge (4) aufweist;
- einen Tragarm (10), der mit dem Flügel (5) verbunden ist und ein schwenkbar am Türrahmen (3) montiertes Ende aufweist, wobei der Tragarm (10) und der Flügel beweglich sind zwischen: einer Schließposition, in der der Flügel (5) den Türrahmen (3) verschließt, wobei die Türanschläge (7) gegen die Rahmenanschläge (4) verriegelt sind; einer Entriegelungsposition, in der die Türanschläge (7) von den Rahmenanschlägen (4) gelöst sind; und einer Öffnungsposition, in der der Flügel (5) vom Türrahmen (3) gelöst ist;
- einen Verriegelungs-/Entriegelungsmechanismus, der dazu geeignet ist, den Übergang von der Schließposition in die Entriegelungsposition und umgekehrt zu steuern, wobei der Verriegelungs-/Entriegelungsmechanismus zu seiner Betätigung einen inneren Hebel (15) und einen äußeren Hebel (19) aufweist, wobei die Hebel (15, 19) an der Türstruktur (9) montiert und zwischen einer Verriegelungsposition und einer Entriegelungsposition beweglich sind;
wobei der Verriegelungs-/Entriegelungsmechanismus Folgendes aufweist:
- eine Steuerwelle (17), die sich entlang einer im Wesentlichen vertikalen Achse erstreckt, wobei die Steuerwelle (17) entlang einer Schwenkverbindung (18) um die Achse der Steuerwelle (17) an der Türstruktur (9) montiert ist, wobei der innere Hebel (15) und der äußere Hebel (19) so mit der Steuerwelle (17) verbunden sind, dass eine Betätigung eines der Hebel (15, 19) die Drehung der Steuerwelle (17) um ihre Achse bewirkt;
- eine Führungsbahn (29), die sich entlang einer zur Steuerwelle (17) im Wesentlichen senkrechten Richtung erstreckt;
- einen am Tragarm (10) befestigten Betätigungsfinger (32), wobei der Betätigungsfinger (32) dazu geeignet ist, mit der Führungsbahn (29) zusammenzuwirken;
- ein mechanisches Getriebe, das dazu geeignet ist, eine Bewegung des Betätigungsfingers (32) zu bewirken, wenn die Steuerwelle (17) gedreht wird;
wobei der Verriegelungs-/Entriegelungsmechanismus Folgendes aufweist:
- eine Betätigungskonfiguration, die dem Winkelhub der Hebel (15, 19) zwischen ihrer Verriegelungsposition und ihrer Entriegelungsposition entspricht, wobei in dieser Konfiguration der Betätigungsfinger (32) in die Führungsbahn (29) eingeführt ist, wobei die Drehung der Steuerwelle (17) eine Bewegung des Betätigungsfingers (32) entlang der Führungsbahn (29) bewirkt;
- eine Freigabekonfiguration, in der sich die Hebel (15, 19) in der Entriegelungsposition befinden, wobei in dieser Konfiguration der Betätigungsfinger (32) zwischen einer ersten Position und einer zweiten Position beweglich ist, wobei sich der Flügel (5) dann in der Öffnungsposition befindet;
wobei die Luftfahrzeugtür **dadurch gekennzeichnet ist, dass**:
- der innere Hebel (15) und der äußere Hebel (19) so mit der Steuerwelle (17) verbunden sind, dass sie sich quer zur Steuerwelle (17) erstrecken;
- die Führungsbahn (29) an ihrem Ende eine Öffnung (33) aufweist;
- der Betätigungsfinger (32) in der ersten Position im Bereich der Öffnung (33) der Führungsbahn (29) angeordnet ist und
- der Betätigungsfinger (32) in der zweiten Position außerhalb der Führungsbahn (29) angeordnet ist.

2. Luftfahrzeugtür nach Anspruch 1, **dadurch gekennzeichnet, dass** das mechanische Getriebe eine Gabel (21) aufweist, die gegenüber der Führungsbahn (29) angeordnet und mit der Steuerwelle (17) verbunden ist, und dass in der Betätigungskonfiguration das Schwenken der Gabel (21) eine Bewegung des Betätigungsfingers (32) entlang der Führungsbahn (29) bewirkt.

3. Luftfahrzeugtür nach Anspruch 2, **dadurch gekennzeichnet, dass** sich die Gabel (21) in einer zur Steuerwelle (17) im Wesentlichen senkrechten Ebene erstreckt und dass die Gabel (21) um eine zur Steuerwelle (17) im Wesentlichen parallele Achse schwenkbar an der Türstruktur (9) montiert ist.

4. Luftfahrzeugtür nach einem der Ansprüche 2 oder 3, **dadurch gekennzeichnet, dass** in der Betätigungskonfiguration der Betätigungsfinger (32) sowohl in die Führungsbahn (29) als auch in die Gabel (21) eingeführt ist.

5. Luftfahrzeugtür nach Anspruch 4, **dadurch gekennzeichnet, dass** der Betätigungsfinger (32) an einem fest mit dem Tragarm (10) verbundenen Betätigungsarm (30) montiert ist, wobei der Betätigungsarm (30) zwischen der Gabel (21) und der Führungsbahn (29) angeordnet ist, wobei der Betätigungsfinger eine Doppelrolle (32) aufweist, die sich quer auf beiden Seiten des Betätigungsarms (30) erstreckt.

6. Luftfahrzeugtür nach einem der Ansprüche 2 bis 5, **dadurch gekennzeichnet, dass** die Gabel (21) zwei Betätigungsschenkel (34) und eine Öffnung (35) an ihrem Ende aufweist und dass in der Freigabekonfiguration die Öffnung (35) der Gabel (21) gegenüber der Öffnung (33) der Führungsbahn (29) angeordnet ist.

7. Luftfahrzeugtür nach einem der Ansprüche 2 bis 6, **dadurch gekennzeichnet, dass** das mechanische Getriebe einen drehfest mit der Steuerwelle (17) verbundenen Nocken (20) aufweist.

8. Luftfahrzeugtür nach Anspruch 7, **dadurch gekennzeichnet, dass** das mechanische Getriebe eine Pleuelstange (24) aufweist, die den Nocken (20) mit der Gabel (21) verbindet und dazu geeignet ist, bei der Drehung des Nockens (20) und der Steuerwelle (17) das Schwenken der Gabel (21) zu bewirken.

9. Luftfahrzeugtür nach Anspruch 8, **dadurch gekennzeichnet, dass** der Nocken (20) eine Nockenbahn (26) aufweist und dass die Pleuelstange (24) an einem ihrer Enden eine in die Nockenbahn (26) eingesetzte Rolle (25) aufweist.

10. Luftfahrzeugtür nach Anspruch 9, **dadurch gekennzeichnet, dass** die Nockenbahn (26) Folgendes aufweist:
- einen ersten Bereich (26A), der sich in einem auf der Steuerwelle (17) zentrierten Kreisbogen erstreckt, wobei der Betätigungsfinger (32) durch die Drehung der Steuerwelle (17) nicht in Bewegung versetzt wird, wenn die Rolle (25) diesen ersten Bereich (26A) durchläuft;
- einen zweiten Bereich (26B), in dem der Betätigungsfinger (32) durch die Drehung der Steuerwelle (17) in Bewegung versetzt wird, wenn die Rolle (25) diesen zweiten Bereich (26B) durchläuft.

11. Luftfahrzeugtür nach einem der Ansprüche 9 oder 10, **dadurch gekennzeichnet, dass** das mechanische Getriebe einen Führungshebel (27) aufweist, der drehbar an der Türstruktur (9) und in Schwenkverbindung mit der Rolle (25) montiert ist.

12. Luftfahrzeugtür nach einem der Ansprüche 8 bis 11, **dadurch gekennzeichnet, dass** die Pleuelstange (24) über eine Verbindungsstange (24) mit der Schwenkachse der Gabel (21) verbunden ist.

13. Luftfahrzeugtür nach einem der vorangehenden Ansprüche, **dadurch gekennzeichnet, dass** der Tragarm (10) mit dem Flügel (5) über einen Tragunterarm (12) verbunden ist, der mit dem Tragarm (10) und mit der Türstruktur (9) schwenkbar verbunden ist, wodurch der Flügel (5) relativ zum Türrahmen (3) in einer Längsrichtung (X) und einer Querrichtung (Y) beweglich ist.

14. Luftfahrzeugtür nach einem der vorangehenden Ansprüche, **dadurch gekennzeichnet, dass** sie einen mit dem Flügel (5) verbundenen Schwenkarm (13) aufweist, der über eine Schwenkverbindung mit dem Türrahmen (3) verbunden und dazu geeignet ist, das Schwenken des Flügels (5) um eine im Wesentlichen vertikale Achse zu bewirken.

15. Luftfahrzeugtür nach einem der vorangehenden Ansprüche, **dadurch gekennzeichnet, dass** die Türanschläge (7) und die Rahmenanschläge (4) an Seitenrändern der Tür angeordnet sind, wobei die Türanschläge (7) durch einen Plan-auf-Plan-Kontakt gegen die Rahmenanschläge (4) verriegelt sind, wenn sich die Tür in der Schließposition befindet.

16. Luftfahrzeugtür nach einem der vorangehenden Ansprüche, **dadurch gekennzeichnet, dass** die Führungsbahn (29) einen Bereich aufweist, dessen Ausrichtung eine Bewegung des Führungsfingers (32) bewirkt, die zu einer gegenseitigen Annäherung des Tragarms (10) und des Flügels (5) führt.

17. Luftfahrzeugtür nach einem der vorangehenden Ansprüche, **dadurch gekennzeichnet, dass** die Führungsbahn (29) einen Bereich aufweist, dessen Ausrichtung eine Bewegung des Führungsfingers (32) bewirkt, die zu einer gegenseitigen Entfernung des Tragarms (10) und des Flügels (5) führt.

18. Luftfahrzeugtür nach einem der vorangehenden Ansprüche, **dadurch gekennzeichnet, dass** die Führungsbahn (29) einen Bereich aufweist, dessen Ausrichtung eine Bewegung des Führungsfingers (32) bewirkt, die zu einer gegenseitigen Seitenbewegung des Tragarms (10) und des Flügels (5) führt.

19. Verfahren zum Entriegeln einer Luftfahrzeugtür nach einem der Ansprüche 1 bis 18, **dadurch gekennzeichnet, dass** in der Betätigungskonfiguration:
- der Betätigungsfinger (32) einen ersten Bereich (29A) der Führungsbahn (29) durchläuft, wodurch bewirkt wird, dass sich der Tragarm (10) und der Flügel (5) aufeinander zubewegen und dass sich der Tragarm (10) und der Flügel (5) miteinander seitlich bewegen, sodass der Flügel (5) nach innen und in einer ersten Richtung seitlich bewegt wird, wobei ein erster Satz von Türanschlägen (7) von den Rahmenanschlägen (4) gelöst wird;
- der Betätigungsfinger (32) einen zweiten Bereich (29B) der Führungsbahn (29) durchläuft, wodurch bewirkt wird, dass sich der Tragarm (10) und der Flügel (5) voneinander wegbewegen, sodass der Flügel (5) nach außen bewegt wird;
- der Betätigungsfinger (32) einen dritten Bereich (29C) der Führungsbahn (29) auf einem Weg durchläuft, wodurch bewirkt wird, dass sich der Tragarm (10) und der Flügel (5) miteinander seitlich bewegen, sodass der Flügel (5) in einer zweiten Richtung seitlich bewegt wird, wobei ein zweiter Satz von Türanschlägen (7) von den Rahmenanschlägen (4) gelöst wird.

## Claims

1. An aircraft door comprising:
- a leaf (5) comprising a door structure (9), an external wall (6) fixed to the door structure (9), and door stops (7);
- a surround comprising a door frame (3) intended to be fixed to the fuselage of the aircraft, the door frame (3) comprising frame stops (4);
- a support arm (10) connected to the leaf (5) and comprising one end mounted to pivot on the door frame (3), this support arm (10) and the leaf being movable between: a closed position in which the leaf (5) closes the door frame (3), the door stops (7) being locked against the frame stops (4); an unlocking position in which the door stops (7) are released from the frame stops (4); and an open position in which the leaf (5) is disengaged from the door frame (3);
- a locking/unlocking mechanism adapted to control the passage from the closed position to the unlocking position, and vice versa, this locking/unlocking mechanism comprising for its actuation an internal lever (15) and an external lever (19), these levers (15,19) being mounted on the door structure (9) and being movable between a locking position and an unlocking position;
the locking/unlocking mechanism comprises:
- a control shaft (17) extending along a substantially vertical axis, the control shaft (17) being mounted on the door structure (9) in a pivot connection (18) around the axis of the control shaft (17), the internal lever (15) and the external lever (19) being connected to the control shaft (17) while extending transversely to the control shaft (17) so that an action on one of the levers (15,19) causes the control shaft (17) to rotate about its axis;
- a guide track (29) extending in a plane substantially orthogonal to the control shaft (17) ;
- an actuating finger (32) fixed to the support arm (10), this actuating finger (32) being adapted to cooperate with the guide track (29);
- a mechanical transmission adapted to cause a movement of the actuating finger (32) when the control shaft (17) is actuated in rotation;
the locking/unlocking mechanism has:
- an actuation configuration corresponding to the angular travel of the levers (15,19) between their locking position and their unlocking position, in which configuration the actuating finger (32) is inserted into the guide track (29), the rotation of the control shaft (17) causing a movement of the actuating finger (32) along the guide track (29);
- a release configuration in which the levers (15,19) are in the unlocked position, in which configuration the actuating finger (32) is movable between a first position and a second position where the leaf (5) then being in the open position.
This aircraft door being **characterised in that** :
- the inner lever (15) and the outer lever (19) are connected to the control shaft (17) by extending transversely to the control shaft (17) ;
- the guide track (29) has an opening (33) at its end;
- the actuating finger (32) is arranged in a first position at the opening (33) of the guide track (29), and
- the actuating finger (32) is arranged in a second position outside the guide track (29).

2. The aircraft door as claimed in claim 1, **characterized in that** the mechanical transmission comprises a fork (21) arranged opposite the guide track (29) and connected to the control shaft (17), and **in that**, in the actuation configuration, the pivoting of the fork (21) causes a movement of the actuating finger (32) along the guide track (29).

3. The aircraft door as claimed in claim 2, **characterized in that** the fork (21) extends in a plane substantially orthogonal to the control shaft (17), and **in that** the fork (21) is pivotally mounted on the door structure (9) about an axis substantially parallel to the control shaft (17).

4. The aircraft door as claimed in one of claims 2 or 3, **characterized in that**, in the actuation configuration, the actuating finger (32) is inserted both into the guide track (29) and into the fork (21).

5. The aircraft door as claimed in claim 4, **characterized in that** the actuating finger (32) is mounted on an actuating arm (30) integral with the support arm (10), the actuating arm (30) being arranged between the fork (21) and the guide track (29), the actuating finger comprising a double roller (32) extending transversely on either side of the actuating arm (30).

6. The aircraft door as claimed in one of claims 2 to 5, **characterized in that** the fork (21) has two actuating branches (34) and an opening (35) at its end, and **in that**, in the release configuration, the opening (35) of the fork (21) is arranged opposite the opening (33) of the guide track (29).

7. The aircraft door as claimed in one of claims 2 to 6, **characterized in that** the mechanical transmission comprises a cam (20) coupled in rotation with the control shaft (17).

8. The aircraft door as claimed in claim 7, **characterized in that** the mechanical transmission comprises a connecting rod (24) connecting the cam (20) to the fork (21) and adapted to cause the pivoting of the fork (21) during the rotation of the cam (20) and of the control shaft (17).

9. The aircraft door as claimed in claim 8, **characterized in that** the cam (20) comprises a cam track (26), and **in that** the connecting rod (24) has at one of its ends a roller (25) inserted into the cam track (26).

10. The aircraft door as claimed in claim 9, **characterized in that** the cam track (26) comprises:
- a first range (26A) extending in an arc of a circle centered on the control shaft (17), the actuating finger (32) not being driven in movement by the rotation of the control shaft (17) when the roller (25) travels over this first range (26A);
- a second range (26B) in which the actuating finger (32) is driven in movement by the rotation of the control shaft (17) when the roller (25) travels over this second range (26B).

11. The aircraft door as claimed in one of claims 9 or 10, **characterized in that** the mechanical transmission comprises a guide lever (27) rotatably mounted on the door structure (9) and in pivot connection with the roller (25).

12. The aircraft door as claimed in one of claims 8 to 11, **characterized in that** the connecting rod (24) is connected to the pivot axis of the fork (21) by a connecting rod (24).

13. The aircraft door as claimed in any one of the preceding claims, **characterized in that** the support arm (10) is connected to the leaf (5) by means of a support forearm (12) which is in pivot connection with the support arm (10) and with the door structure (9), the leaf (5) thus being movable relative to the door frame (3) in a longitudinal direction (X) and a transverse direction (Y).

14. The aircraft door as claimed in any one of the preceding claims, **characterized in that** it comprises a pivot arm (13) connected to the leaf (5) and connected to the door frame (3) by a pivot connection, and adapted to cause the pivoting of the leaf (5) about a substantially vertical axis.

15. The aircraft door as claimed in any one of the preceding claims, **characterized in that** the door stops (7) and the frame stops (4) are arranged on the lateral edges of the door, the door stops (7) being locked against the frame stops (4) by a flat-on-flat contact when the door is in the closed position.

16. The aircraft door as claimed in any one of the preceding claims, **characterized in that** the guide track (29) comprises a range of which the orientation causes a movement of the guide finger (32) causing a mutual drawing together of the support arm (10) and the leaf (5).

17. The aircraft door as claimed in any one of the preceding claims, **characterized in that** the guide track (29) comprises a range of which the orientation causes a movement of the guide finger (32) resulting in a mutual distancing of the support arm (10) and the leaf (5).

18. The aircraft door as claimed in any one of the preceding claims, **characterized in that** the guide track (29) comprises a range of which the orientation causes a movement of the guide finger (32) causing a mutual lateral movement of the support arm (10) and the leaf (5).

19. A method for unlocking an aircraft door as claimed in one of claims 1 to 18, **characterized in that**, in the actuation configuration:
- the actuating finger (32) travels over a first range (29A) of the guide track (29) causing a movement of mutual drawing together of the support arm (10) and the leaf (5) as well as a mutual lateral displacement movement of the support arm (10) and the leaf (5), so that the leaf (5) is moved inwardly and in a lateral direction in a first direction, releasing a first assembly of door stops (7) in relation to the frame stops (4);
- the actuating finger (32) travels over a second range (29B) of the guide track (29) causing a mutual distancing of the support arm (10) and the leaf (5), so that the leaf (5) is moved outward;
- the actuating finger (32) travels over a third range (29C) of the guide track (29) along a path causing a mutual lateral displacement movement of the support arm (10) and the leaf (5), so that the leaf (5) is moved in a lateral direction in a second direction, releasing a second assembly of door stops (7) relative to the frame stops (4).
